Europäisches Patentamt

European Patent Office

Office européen des brevets

(11) Veröffentlichungsnummer: **0 381 257**
**A2**

## (12) EUROPÄISCHE PATENTANMELDUNG

(21) Anmeldenummer: **90200097.5**

(22) Anmeldetag: **05.01.90**

(51) Int. Cl.⁵: **B29C 53/60, F16L 9/16**

(30) Priorität: **05.01.89 CH 33/89**

(43) Veröffentlichungstag der Anmeldung:
**08.08.90 Patentblatt 90/32**

(84) Benannte Vertragsstaaten:
**DK**

(71) Anmelder: **AMETEX AG**
**Eternitstrasse 3**
**CH-8867 Niederurnen(CH)**

(72) Erfinder: **Shaw, Keith James**
**Rainstrasse 50**
**CH-8804 Pfäffikon(CH)**
Erfinder: **Caluori, André**
**Gassa Suto 52**
**CH-7013 Domat/Ems(CH)**
Erfinder: **Heer, Hansjörg**
**Birkenstrasse 8**
**CH-8856 Tuggen(CH)**

(74) Vertreter: **Scheidegger, Werner & Co.**
**Stampfenbachstrasse 48 Postfach**
**CH-8023 Zürich(CH)**

(54) **Wickelvorrichtung für Rohre.**

(57) Die Rohrwickelvorrichtung weist einen zwischen zwei Ringen (5,6) aus Stäben (7,8) gebildeten stationären Käfig (3) auf. Das Besondere liegt darin, dass wenigstens ein Teil der Käfigstäbe (8) gegenüber der Käfigachse um den Steigungswinkel des schraubenlinienförmig aufzuwickelnden Bandes (2) zwischen den Ringen (5,6) schräggestellt und angetrieben sind, so dass das zu wickelnde Band senkrecht auf die angetriebenen Stäbe (8) zugeführt werden kann. Damit wird es möglich, die Reibungskräfte zwischen Band (2) und Stäben (8) optimal auszunützen und durch den Antrieb der Stäbe das Rohr zu wickeln und dieses weiter vorzutreiben.

Fig.1

## Wickelvorrichtung für Rohre

Die vorliegende Erfindung betrifft eine Vorrichtung zur Bildung von Rohren durch schraubenlinienförmiges Wickeln eines Bandes, mit einem stationären zylindrischen Wickelkäfig aus einer Mehrzahl zwischen zwei parallelen ringförmigen Trägerplatten angeordneten, den zylindrischen Mantel des Käfigs bildenden stangenförmigen Elementen, von denen wenigstens ein Teil um ihre jeweilige Längsachse drehend angetrieben sind, um ein mittels einer Führungseinrichtung auf die Käfiginnenseite geführtes Band auf dem gewünschten Durchmesser abzustützen und in Wickelrichtung vorzutreiben und die aneinanderstossenden Bandränder zusammenzufügen.

Eine Wickelvorrichtung der vorstehend beschriebenen Art, mittels welcher Kunststoffbänder bzw. -profile schraubenlinienförmig zu stabilen, relativ steifen Rohren an Ort, z.B. in einem Schacht gewickelt und gleichzeitig, d.h. bei fortschreitender Bildung als sog. Renovationsrohre in bestehende, sanierungsbedürftige Rohrleitungen vorgetrieben werden, sind z.B. aus dem Schweizer Patent No....... (Anmeldung Nr. 1 449/87) der Inhaberin bekannt.

Obwohl zwar bereits bei dieser bekannten Vorrichtung ein Teil der Käfigstangen bzw. -rollen in Vorschubrichtung des Bandes angetrieben werden, um damit den Wickel- und Vortriebvorgang des Rohres zu unterstützen, vermag diese Lösung nicht optimal zu befriedigen. Einerseits weist die bekannte Vorrichtung einen komplizierten und viel Platz beanspruchenden Führungs- und Antriebsmechanismus auf und andererseits werden die Reibungskräfte zwischen den angetriebenen Käfigstangen und dem Band nur schlecht ausgenützt.

Aufgabe der vorliegenden Erfindung ist somit die Schaffung einer verbesserten Wickelvorrichtung, bei welcher die Reibungskräfte zwischen den angetriebenen Käfigstangen und dem zu wickelnden Band optimal ausgenützt werden, so dass in der Regel auf einen zusätzlichen Bandzuführmechanismus verzichtet werden kann.

Dies wird bei einer Wickelvorrichtung der eingangs definierten Art erfindungsgemäss dadurch erreicht, dass die angetriebenen Käfigstangen um den Steigungswinkel des schraubenlinienförmig aufzuwickelnden Bandes schräggestellt zwischen den ringförmigen Trägerplatten angeordnet sind und dass Mittel vorgesehen sind, um das zu wickelnde Band senkrecht zur Längsachse der angetriebenen Käfigstangen an letztere anzulegen.

Dank dieser besonderen Anordnung der angetriebenen Käfigstangen werden die zwischen den Stangen und dem darauf aufliegenden Band voll bzw. optimal ausgenützt, um einerseits das Band vorzutreiben und dabei in die gewünschte Rohrform zu biegen, die aneinanderstossenden Bandränder zusammenzufügen und das so gebildete Rohr in einen vor dem Vorrichtungsausgang liegenden Durchgang unter Drehung um die Längsachse vorzutreiben.

Dank der um den Steigungswinkel des Wickelbandes schräggestellten angetriebenen Käfigstangen liegen letztere über die ganze Breite des senkrecht zu deren Längsachse zugeführten Bandes an letzterem an und bringen dabei die zum Vortrieb des Bandes erforderlichen Kräfte auf, dies unter Ausnutzung der zwischen den Stäben und dem Band bestehenden Reibungskräfte.

Ein zusätzlicher Vorschubmechanismus für das Band erübrigt sich in der Regel, obwohl ein solcher zur Ueberwindung von Reibungskräften in der Bandführungs einrichtung, beim Abrollen des Bandes etc. vorgesehen sein kann.

Um das Band tangential auf die Käfiginnenseite und senkrecht zur Längsachse der schräggestellten Käfigstangen einzuführen, ist vorzugsweise eine Führungseinrichtung vorgesehen, welche um einen einstellbaren Winkel verschwenkbar am Gestell der Vorrichtung angeordnet ist.

Zum Zusammenfügen der aneinanderstossenden Bandränder (grundsätzlich eine Nut- und Kamm-Verbindung) ist vorzugsweise eine Bandverschluss-Rolle vorgesehen, welche ins Käfiginnere ragt und sich im Bereich der Bandverschlussstelle von der Innenseite her gegen das Band anlegt, gegebenenfalls unter Verwendung einer Verschluss-Gegenrolle (welche durch einen der Käfigstäbe gebildet sein kann).

Die Länge des Käfigs beträgt normalerweise das Mehrfache einer Bandbreite, so dass eine optimale Kalibrierung des Rohres unter allen Betriebsbedingungen gewährleistet ist.

Wegen dieser Käfiglänge mag es besonders vorteilhaft sein, den angetriebenen Käfigstäben, im Längsschnitt gesehen, nicht eine zylindrische, sondern eine konkave Form zu geben. Damit wird die durch die Schrägstellung der angetriebenen Käfigstäbe erzeugte Abweichung der Hüllfläche (bei parallel zur Käfigachse verlaufenden Stäben ein Zylinder) korrigiert. Für übliche Anwendungsfälle können aber auch zylindrische Käfigstangen ausreichen und die optimale Uebertragung der Reibungsbzw. Antriebskräfte gewährleisten.

Die Käfigstäbe sind normalerweise aus Stahl. Die Oberflächen der Stäbe können dabei glatt oder aufgerauht (gerippt) ausgebildet sein, oder gegebenenfalls aus einem Ueberzug aus Kunststoff (z.B. Elastomeren) bestehen.

Durch die Schrägstellung der angetriebenen Käfigstäbe wird eine optimale Wicklung der Rohre und deren Vortrieb erreicht. Allerdings bedingt die erfindungsgemässe Konstruktion einen gewissen Aufwand beim Antrieb der Käfigstäbe (Gelenkverbindung zwischen den normalen Antriebswellen und den schräggestellten Stäben oder individuelle Hydraulikmotoren) sowie deren Lagerung. Wie Versuche gezeigt haben, lohnt sich jedoch dieser Aufwand.

Die Erfindung wird nachstehend anhand eines in der Zeichnung dargestellten Ausführungsbeispiels noch etwas näher erläutert. Es zeigt:

Fig. 1 eine perspektivische Ansicht, rein schematisch, einer Vorrichtung nach der Erfindung; und

Fig. 2 eine ebenfalls perspektivische Darstellung von Teilen der Vorrichtung nach Fig. 1 (die übrigen Teile wurden aus Gründen der besseren Uebersicht weggelassen).

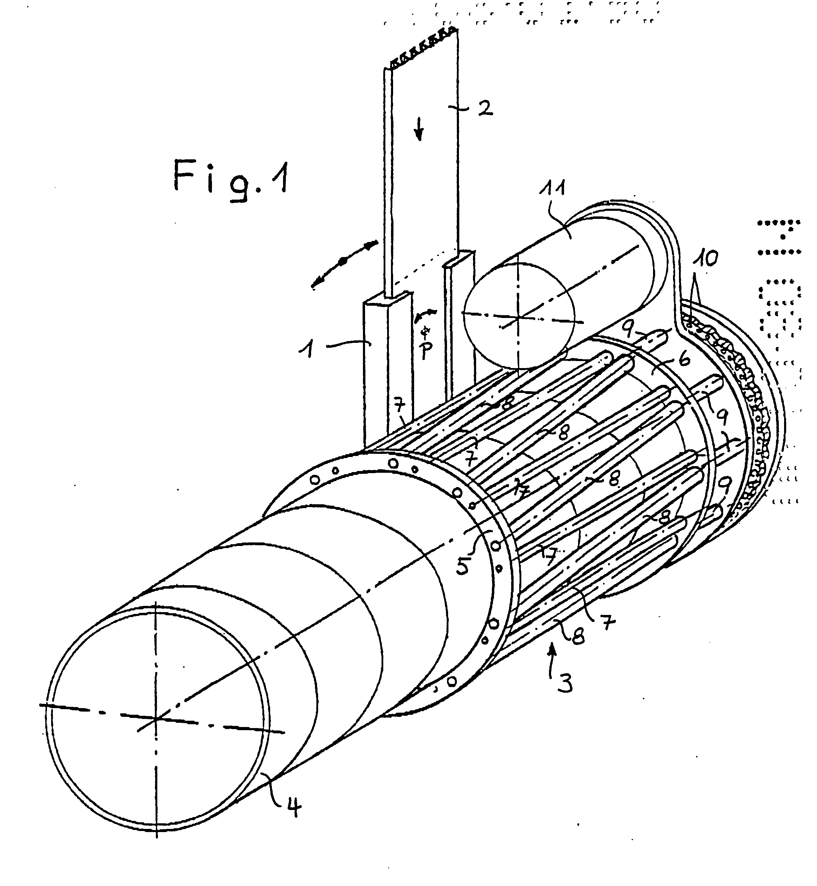

Fig. 1 der Zeichnung zeigt rein schematisch den grundsätzlichen Aufbau einer Wickelvorrichtung nach der Erfindung. Diese Vorrichtung umfasst in einem Montagegestell (nicht dargestellt) eine Führungseinrichtung 1, durch welche ein Kunststoffband oder -profil 2 unter einem einstellbaren Winkel tangential in den eigentlichen Wickelkäfig 3 eingeführt wird. Die Einrichtung 1 ist am Gestell montiert und an diesem um den gewünschten Winkel verschwenkbar angeordnet. Der einzustellende Winkel entspricht dem Steigungswinkel des schraubenlinienförmig aufzuwickelnden Profils 2, welcher seinerseits von der Breite des Profils und vom Durchmesser des zu bildenden Rohres 4 abhängt.

Mit der gezeigten Vorrichtung kann somit ein Profil vorbestimmter Breite zu einem Rohr mit vorbestimmtem Durchmesser gewickelt werden. Bei Aenderung der Profilbreite ist die Führungseinrichtung 1 gegen eine solche passender Breite auszuwechseln und der Anstellwinkel der Einrichtung 1 zur Längsachse des Käfigs 3 neu einzustellen. Für andere Rohrdurchmesser ist der ganze Käfig 3 durch einen Käfig mit dem gewünschten Durchmesser auszuwechseln und die Führungseinrichtung 1 passend einzustellen.

Der Wickelkäfig 3 weist ein Grundgestell aus zwei parallelen ringförmigen Trägerplatten 5 und 6 auf, welche durch fixe Stangen 7 im Abstand gehalten sind. Die Stangen 7 gewährleisten eine ausreichende Steifigkeit des feststehenden, im übrigen am nicht dargestellten Montagegestell befestigten Käfigs 3.

Jeweils zwischen zwei fixen Käfigstangen 7 ist eine um den Steigungswinkel des schraubenlinienförmig aufzuwickelnden Profils 2 schräggestellte, zwischen den Ringen 5 und 6 antreibbar angeordnete Stange 8 vorgesehen. Die Stangen 8 sind in speziellen Schräglagern in den beiden Ringen 5,6 gelagert und werden mittels Antriebswellen 9 und zwischengeschaltete Wellengelenke (nicht dargestellt) angetrieben.

Der Antriebsmechanismus 10 (Kettenantrieb) ist auf dem rückwärtigen Teil des Käfigs 3 montiert und umfasst z.B. einen Kettenantrieb, welcher seinerseits von einem passenden Hydraulikmotor 11 angetrieben wird.

Die angetriebenen Käfigstangen 8 sind an ihren Enden in den Ringen 5,6 jeweils auf einem gleichen Durchmesser bezüglich der Käfigachse gelagert. Ihre Schrägstellung ist für einen bestimmten Käfigdurchmesser (Rohrdurchmesser) auf eine vorbestimmte Profilbreite eingestellt, so dass nach einem Bandumgang das Zusammenfügen von zwei aneinanderstossenden Profilrändern erfolgt (die Profilränder sind in bekannter Weise ausgebildet, d.h. sie ermöglichen ein Zusammenfügen mittels Nut und Kamm).

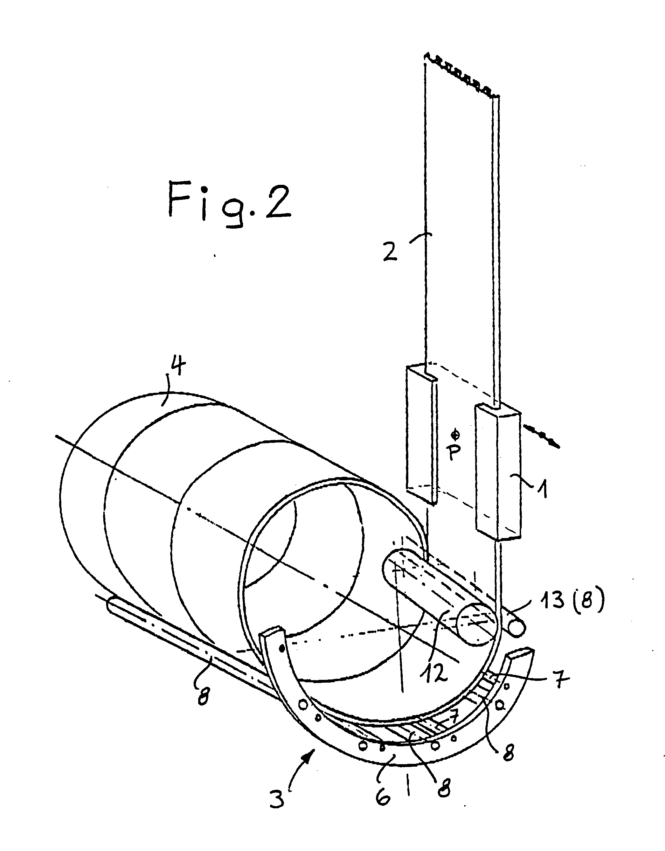

Um das Zusammenfügen zu erleichtern, ist vorzugsweise eine Bandverschluss-Rolle 12 vorgesehen, welche vom rückwärtigen Ende her in den Käfig 3 hineinragt, wie Fig. 2 zeigt. Die Rolle 12 ragt um einen solchen Betrag in den Käfig 3 hinein, dass sie sich im Bereich der Verschlussstelle von innen her gegen das Band anlegt und dieses mit dem Rand des zugeführten Profils zusammenfügt. Wie gezeigt ist vorzugsweise auf der Aussenseite hinter der Verschlussrolle 12 eine Verschluss-Gegenrolle 13 vorgesehen. Diese Gegenrolle 13 sollte drehbar ausgeführt sein. Sie kann z.B. von einem der schräggestellten Käfigstäbe 8 gebildet sein oder aus einer zusätzlichen, mit der Rolle 12 ein z.B. an der Führungseinrichtung 1 montiertes Rollenpaar mit Klemmspalt bildenden Rolle bestehen. Vorzugsweise ist wenigstens eine der Rollen 12 oder 13 ebenfalls angetrieben.

Aus Fig. 2 geht auch hervor, wie die Führungseinrichtung 1 z.B. um den Punkt P verschwenkbar ist, um dem Profil 2 bezüglich der Käfiglängsachse eine solche Schrägstellung zu verleihen, dass das Profil 2 im rechten Winkel auf die angetriebenen Käfigstäbe 8 auftrifft.

In der Schrägstellung dieser Käfigstäbe 8 und deren Antrieb in Vorschubrichtung des Profils 2 liegt der Kern der vorliegenden Erfindung:

Da das Profil 2 im rechten Winkel auf die angetriebenen Käfigstäbe zu liegen kommt, werden die Reibungskräfte entlang der ganzen Länge der Berührungslinie wirksam und das Profil bzw. Band wird optimal transportiert. Dieser Antrieb über die Vielzahl an angetriebenen Käfigstangen reicht aus, um das Profil zu verbiegen, die Ränder zusammenzufügen und das gebildete Rohr nach dem Austritt aus der Wickelvorrichtung in eine Ausnehmung (zu sanierende Rohrleitung) vorzutreiben.

Durch die relative Länge der Käfigstäbe (ein Mehrfaches der Profilbreite) wird auch das gebildete Rohr nicht nur sehr genau kalibriert, sondern auch noch zusätzlich durch dessen Anliegen an die Stäbe in Drehung versetzt und vorgetrieben.

Durch die zur Käfigachse schräggestellten angetriebenen Stäbe 8 liegen diese, falls sie zylindrisch ausgebildet sind, nicht über ihre ganze Länge auf dem durch den Käfig gebildeten Zylinder. Für kleine Profilbreiten ist dies in der Praxis unbedeutend. Dieser Effekt könnte allerdings durch die Auswahl einer im Längsschnitt gesehen konkaven Form der Stäbe ausgeglichen werden. Es ist somit möglich, die angetriebenen Käfigstäbe zylindrisch, konkav oder konvex auszugestalten.

Die Stäbe bestehen üblicherweise aus Stahl, mit einer glatten oder rauhen Oberfläche (z.B. gerillt). Sie können mit einem reibungserhöhenden Ueberzug (Kunststoff) versehen sein.

## Ansprüche

1. Vorrichtung zur Bildung von Rohren durch schraubenlinienförmiges Wickeln eines Bandes, mit einem stationären zylindrischen Wickelkäfig aus einer Mehrzahl zwischen zwei parallelen ringförmigen Trägerplatten angeordneten, den zylindrischen Mantel des Käfigs bildenden stangenförmigen Elementen, von denen wenigstens ein Teil um ihre jeweilige Längsachse drehend angetrieben sind, um ein mittels einer Führungseinrichtung auf die Käfiginnenseite geführtes Band auf dem gewünschten Durchmesser abzustützen und in Wickelrichtung vorzutreiben und die aneinanderstossenden Bandränder zusammenzufügen, dadurch gekennzeichnet, dass die angetriebenen Käfigstangen (8) um den Steigungswinkel des schraubenlinienförmig aufzuwickelnden Bandes (2) schräggestellt zwischen den ringförmigen Trägerplatten (5,6) angeordnet sind und dass Mittel (1) vorgesehen sind, um das zu wickelnde Band senkrecht zur Längsachse der angetriebenen Käfigstangen (8) an letztere anzulegen.

2. Vorrichtung nach Anspruch 1, dadurch gekennzeichnet, dass die Führungseinrichtung (1) das Band (2) tangential auf die Käfiginnenseite zuführt und dass diese Einrichtung bezüglich der Käfiglängsachse um einen beliebig einstellbaren Winkel verschwenkbar am Gestell der Vorrichtung angeordnet ist, um das Band (2) senkrecht zur Längsachse der schräggestellten Käfigstangen (8) an letztere anzulegen.

3. Vorrichtung nach einem der Ansprüche 1 oder 2, dadurch gekennzeichnet, dass am Eintritt des Bandes (2) in den Käfig (3) eine ins Käfiginnere ragende Bandverschluss-Rolle (12) angeordnet und dazu vorgesehen ist, sich von der Innenseite her im Bereich der Bandverschlussstelle gegen sich überlappende Bandränder anzulegen und aneinanderstossende Bandränder zusammenzufügen.

4. Vorrichtung nach Anspruch 3, dadurch gekennzeichnet, dass die Bandverschluss-Rolle (12) wenigstens im Bereich der Verschlussstelle gegen das Band (2) anlegbar ist und sich über etwas mehr als die Breite des zugeführten Bandes (2) erstreckt.

5. Vorrichtung nach Anspruch 3 oder 4, dadurch gekennzeichnet, dass der Bandverschluss-Rolle (12) eine aussen auf dem Käfigmantel angeordnete Verschluss-Gegenrolle (13) zugeordnet ist, um zusammen mit der Verschlussrolle (12) einen Zusammenfügungsspalt für miteinander zu verbindende Bandränder zu bilden.

6. Vorrichtung nach Anspruch 5, dadurch gekennzeichnet, dass die Verschluss-Gegenrolle (13) durch eines der den Käfigmantel bildenden stabförmigen Elemente (7;8) gebildet ist.

7. Vorrichtung nach einem der Ansprüche 3-6, dadurch gekennzeichnet, dass die Bandverschluss-Rolle (12) und/oder die Verschluss-Gegenrolle (13) in Durchlaufrichtung des Bandes (2) angetrieben ist.

8. Vorrichtung nach einem der Ansprüche 1-7, dadurch gekennzeichnet, dass neben den angetriebenen Käfigstangen (8) noch fixe, parallel zur Käfigachse verlaufende Stangen (7) angeordnet sind, welche das Grundgerüst des Käfigs (3) bilden.

9. Vorrichtung nach einem der Ansprüche 1-8, dadurch gekennzeichnet, dass die zur Käfiglängsachse schräggestellten Käfigstangen (8) im Längsschnitt gesehen eine zylindrische, konkave oder konvexe Form aufweisen.

10. Vorrichtung nach Anspruch 9, dadurch gekennzeichnet, dass die Oberfläche der walzenförmigen Käfigstangen (8) glatt oder rauh, z.B. gerippt ausgebildet ist.

11. Vorrichtung nach einem der Ansprüche 1-10, dadurch gekennzeichnet, dass die angetriebenen Käfigstangen (8) aus Stahl, gegebenenfalls mit einem Ueberzug aus Kunststoff oder einem Elastomeren, bestehen.

12. Vorrichtung nach einem der Ansprüche 1-11, dadurch gekennzeichnet, dass eine zusätzliche Antriebsvorrichtung vorgesehen ist, um das Band bis zur Anlage an die Käfigstangen in den Käfig zu stossen.

6

# Fig.1

# Fig.2